# EUROPEAN PATENT APPLICATION

(11) **EP 2 413 406 A2**
(43) Date of publication of application: **01.02.2012**
(21) Application number: 11175260.6
(22) Date of filing: 25.07.2011
(51) Int. Cl.: H01M 4/92

(54) **Catalyst material and method of manufacturing the same**

(30) Priority: 28.07.2010 JP 2010168716
(71) Applicant: Hitachi Ltd., Tokyo (JP)
(72) Inventor: Morishima, Makoto, Tokyo 100-8220 (JP); Suzuki, Shuichi, Tokyo 100-8220 (JP)
(74) Representative: Beetz & Partner

(57) **Abstract**

It is an object to inhibit a corrosion and disappearance of carbon included in a catalyst carrier to enhance the durability of a fuel cell.

A catalyst carrier is used to adhere a catalyst metal (23) to the surface of a protective layer for carbon (22), the catalyst carrier comprising carbon (21) and the protective layer for carbon (22) with which the carbon (21) is coated, the protective layer for carbon (22) comprising silicon oxide and silicon carbide. Among the protective layer for carbon (22), a vicinity part of an interface between the protective layer for carbon (22) and the carbon (21) comprises silicon carbide, and the surface part of said protective layer for carbon (22) desirably comprises silicon oxide.

## Description

### Field of the Invention

The present invention relates to a catalyst material and the production process of the same.

### Background of the Invention

Recent advances in information-processing technology increase the volume of information to be processed in electronics and the like, while the increased information need to be more fastly processed with higher functionality. Thus, the electronics and the like need an electric source having high power density and high energy density, i.e., an electric source having a long continuous driving time is needed.

A need for an undersized electric generator with no need of charging, i.e., a micro electric generator easily capable of fuel servicing is increased. From such a background, the importance of a fuel cell has been considered.

A fuel cell is a generating set which comprises at least a solid or liquid electrolyte, and two electrodes, an anode and a cathode, causing an intended electrochemical reaction, wherein the chemical energy of its fuel is directly converted into electric energy with high efficiency.

Among such fuel cells, the one which uses a solid polymer electrolyte membrane as an electrolyte and uses hydrogen as fuel is called as "PEFC: Polymer Electrolyte Fuel Cell", while the one using methanol as fuel is called as "DMFC: Direct Methanol Fuel Cell".

In these PEFC and DMFC, the improvement of their durability is one of problems. Among others, the durability improvement of a catalyst material used for the electrodes is important.

For example, Patent Document 1 discloses a catalyst particle, characterized by comprising a base particle having a first particle size of nanometer order, and one or more metals or their derivatives with which at least a part of the surface of the base particle is coated.

Further, Patent Document 2 discloses a catalyst support electrode for a Polymer Electrolyte Fuel Cell, wherein an anti-corrosion metal oxide with a catalyst metal microparticle supported is dispersed and supported on the surface of an electrically-conductive carrier which is electrically-conductive carbon or catalyst metal support carbon.

Furthermore, Patent Document 3 discloses a catalyst support structure wherein a layer mainly comprising metal oxide is formed on the surface of a catalyst support substrate, and a platinum group metal is adhered thereto.

In addition, Patent Document 4 discloses an electrocatalyst wherein an electrically conductive carrier, a nonprecious metal oxide catalyst to be supported on the electrically conductive carrier above, and a protective layer protecting the nonprecious metal oxide catalyst above are formed.

[Patent Document 1] JP-A-2003-80077
[Patent Document 2] JP-A-2004-363056
[Patent Document 3] JP-A-S-174838
[Patent Document 4] JP-A-2010-67509

### Brief Summary of the Invention

Commonly, as a catalyst material for a PEFC or a DMFC, particles of a precious metal such as platinum are used, which are, if necessary, supported on a carbon carrier for use. However, when the catalyst metal is directly supported on the carbon carrier, the carbon carrier will have corroded and disappeared due to its catalytic action. Therefore, the particles of the catalyst metal without carrier will have cohered, followed by the decrease of its effective surface area.

As a means for preventing the cohesion of the catalyst particles due to the corrosion and disappearance of such carbon carrier, there exist a catalyst material using no carbon carrier, and the one wherein a catalyst metal is not directly supported on a carbon carrier.

When a catalyst material with a catalyst metal supported on the surface of metal oxide particles is used for an electrode of a fuel cell, it causes resistance loss because metal oxide is lower in electron conductivity than carbon.

On the other hand, when metal oxide particles with a catalyst metal supported are supported on carbon, the carbon and the catalyst metal come into contact with each other not a little, and thus the corrosion and disappearance of carbon will be caused. In this case, the cohesion of the catalyst metal can be avoided since the catalyst metal is supported on the metal oxide particles, while the resistance loss will have been increased due to the disappearance of carbon.

In addition, a catalyst material whose surface is coated with a metal oxide is preferred in that the corrosion and disappearance of carbon can be avoided due to no contact between a catalyst metal and carbon, and in that the resistance loss is small. However, it is difficult to coat the carbon with the metal oxide due to low adhesion properties between the metal oxide and the carbon, whereby most of the carbon surface will be exposed.

An object of the present invention is to inhibit the corrosion and disappearance of carbon included in a catalyst carrier to improve the durability of a fuel cell.

The catalyst carrier of the present invention comprises: carbon; and a protective layer for carbon with which the carbon is coated, wherein the protective layer for carbon above comprises silicon carbide and silicon oxide.

### Advantages of the Invention

According to the present invention, a fuel cell can be provided wherein the corrosion and disappearance of carbon included in a catalyst carrier are inhibited to improve the durability of the fuel cell.

### Brief Description of the Drawings

Fig. 1 is a typical sectional view showing a catalyst carrier of Example,
Fig. 2 is a typical sectional view showing a fuel cell of Example,
Fig. 3 is a graph showing an XPS profile (Si 2p) of a catalyst carrier of Example,
Fig. 4 is a typical diagram showing a catalyst carrier of Example, and
Fig. 5 is a schematic sectional view showing a portable information terminal of Example.

### Detailed Description of the Invention

The present invention relates to a catalyst carrier, a catalyst material, and a method for manufacturing the same, particularly relates to a catalyst material and the like used for a fuel cell.

Hereafter, the catalyst carrier, catalyst material, membrane electrode assembly, fuel cell, and fuel-cell-power generation system of one illustrative embodiment of the present invention, and a method for manufacturing the same will be described.

The above catalyst carrier comprises: carbon; and a protective layer for carbon with which the carbon is coated, wherein the protective layer for carbon comprises silicon carbide and silicon oxide.

In the above catalyst carrier, it is preferred that, among the protective layer for carbon, a vicinity part of an interface between the protective layer for carbon and the carbon comprises silicon carbide, while a surface part of the protective layer for carbon comprises silicon oxide.

In the catalyst carrier above, the protective layer for carbon preferably comprises at least one element selected from the group consisting of titanium, germanium, niobium, zirconium, molybdenum, ruthenium, rhodium, tin, tantalum, tungsten and osmium.

In the catalyst carrier above, a surface of the protective layer for carbon preferably comprises at least one functional group of phosphate group or sulfonic acid group, wherein the sulfonic acid group is the one which is also referred to as "sulphonic acid group", and -SO₃H included in the protective layer. Since these phosphate group and sulfonic acid group easily releases hydrogen ion (proton), they contribute to the enhancement of proton conductivity.

The silicon content of the protective layer for carbon of the catalyst carrier above is preferably 20 atomic % or more based on elements consisting of metal elements, silicon, phosphorus, sulfur, arsenic, selenium and tellurium, among elements detected when the ingredients of the protective layer for carbon are analyzed through an Inductively Coupled Plasma-Atomic Emission Spectrometer: ICP-AES.

The catalyst carrier above is preferably the one wherein the protective layer for carbon is 10 nm or less in thickness.

The catalyst material above comprises: the catalyst carrier above; and a catalyst supported on the catalyst carrier.

In the catalyst material above, the catalyst preferably comprises at least one element selected from the group consisting of ruthenium, palladium, iridium, platinum and gold.

The membrane electrode assembly of the present invention comprises: an anode; a cathode; and an electrolyte membrane, wherein the anode comprises the above catalyst material and a proton conductive material, and oxidizes fuel, the cathode comprises the above catalyst material and a proton conductive material, and reduces oxygen, the electrolyte membrane is disposed between the anode and the cathode, and has proton conductivity.

The above fuel cell comprises: the above membrane electrode assembly; a member for supplying fuel; a member for supplying oxygen; and a member for collecting current.

The above fuel-cell-power generation system comprises the above fuel cell.

The above method for manufacturing the above catalyst carrier is the one for producing the catalyst carrier comprising carbon and a protective layer for carbon for coating this carbon, wherein the process comprises the steps of: coating the carbon with a precursor of the protective layer for carbon; and subjecting the resulting material to heat treatment after coating the carbon with the precursor, wherein the precursor comprises at least a polycarbosilane derivative.

In the above method for manufacturing the above catalyst carrier, the precursor preferably comprises alkoxide, such as methoxide, ethoxide and propoxide.

In addition, as fuel for a fuel cell, hydrogen and methanol have been used. However, an alkali hydride, hydrazine, or dimethylether, which is a pressurized liquefied gas, is considered. Furthermore, as an oxidant gas, air or oxygen is used.

The fuel is electrochemically oxidized at the anode, while it is reduced at the cathode, and an electric potential difference is caused between both of the electrodes. At this time, when a load is applied between both of the electrodes as an external circuit, an ion migration is caused in an electrolyte, while electric energy is produced in an external load.

Therefore, various fuel cells have high expectation in a *large-scale electricity generation system*, *a small-scale distributed cogeneration system*, *an* electric power system for electrical vehicles, and the like, and development toward the practical use of the same is actively expanded.

Hereafter, illustrative embodiments will be described in detail.

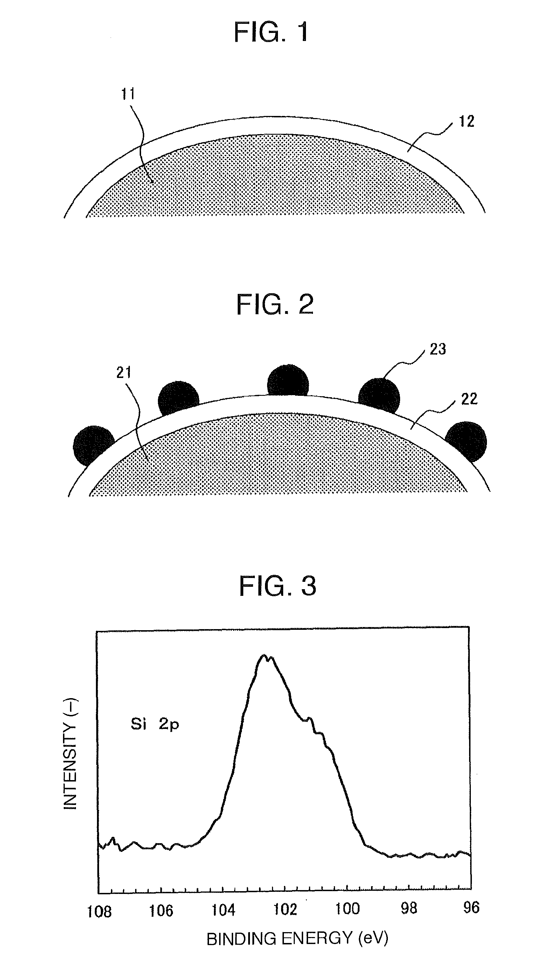

Fig. 1 shows a typical sectional view of a catalyst carrier of Example.

This figure is constituted such that the surface of carbon (11) is coated with a protective layer for carbon (12), wherein as the carbon (11), carbon black, activated carbon, graphite, carbon nanotube, and the like can be used. Preferably, the one having a specific surface area of 10 to 2000 m²/g is good.

The protective layer for carbon (12) is a material higher in corrosion resistance than the carbon (11), which is specifically a composite material of silicon carbide, silicon oxide, and a metal oxide. Here, in elements detected when the ingredients of the protective layer for carbon (12) are analyzed through an Inductively Coupled Plasma-Atomic Emission Spectrometer: ICP-AES, the amount of silicon among elements group consisting of metal elements, silicon, phosphorus, sulfur, arsenic, selenium and tellurium is 20 atomic % or more. Incidentally, silicon is a nonmetallic element, and is not included in the group of the metal elements.

At the surface layer side (the surface layer part) of the protective layer for carbon (12), silicon forms an oxide at a high ratio, while at the carbon (11) side (the vicinity part of an interface between the protective layer for carbon and the carbon), silicon forms carbide at a high ratio.

By adopting such constitution, silicon carbide at the carbon (11) side can be bonded to carbon (11) to coat the protective layer for carbon (12) therewith by a large adhesion force. As a result, a high carbon coverage for the protective layer for carbon (12) can be provided. In addition, silicon oxide at the surface layer side shows a high stability.

The protective layer for carbon (12) may be a constitution such as includes no metal, and includes merely silicon. In this case, a higher carbon coverage can be derived due to a high ratio of silicon carbide. However, when silicon oxide and silicon carbide are used for a use of passing a lot of current, the resistance loss is increased due to their low electron conductivities. Therefore, the resistance loss can be decreased by mixing silicon oxide and silicon carbide with a metal oxide, which is higher in electron conductivity than silicon oxide and silicon carbide.

However, when the ratio of silicon has been excessively decreased, the ratio of silicon carbide is decreased, and the carbon coverage of the protective layer for carbon (12) is decreased.

Therefore, it is necessary that the silicon content of the protective layer for carbon (12) is 20 atomic % or more relative to an elemental group consisting of metal elements, silicon, phosphorus, sulfur, arsenic, selenium and tellurium among the one detected when the ingredients of the protective layer for carbon (12) are analyzed through an Inductively Coupled Plasma-Atomic Emission Spectrometer (ICP-AES). The ratio of silicon can be analyzed even through Energy Dispersive X-ray Analysis (EDX).

A metal included in the protective layer for carbon (12), except silicon, is preferably at least one selected from the group consisting of titanium, germanium, niobium, zirconium, molybdenum, ruthenium, rhodium, tin, tantalum, tungsten and osmium. These elements show the high stability of oxide, in particular, the degree of the elution of such elements becomes small even in a fuel-cell power generation environment. When the metal begins to elute, an eluted metal cation has been bonded to an ion-exchange group in the electrolyte, which results in interference with proton movement, whereby the output power of the fuel cell is decreased, which is not preferred.

Additionally, the thickness of the protective layer for carbon (12) is preferably 10 nm or less. When the protective layer for carbon (12) is thickened over 10 nm, the electron conductivity is increased, which is not preferred.

A catalyst carrier of Example can be manufactured by coating the surface of carbon with a precursor for a protective layer for carbon including a polycarbosilane derivative, followed by heat treatment, wherein as the polycarbosilane derivative, polycarbosilane, allylhydridopolycarbosilane and the like can be used. The use of the polycarbosilane derivative can enhance adhesion properties between the protective layer for carbon and the carbon.

As a method of coating the carbon with the polycarbosilane derivative, for example, there exists the one wherein the polycarbosilane derivative is diluted with a solvent, and the same is mixed with the carbon, followed by the removal of the solvent. Here, as the solvent, for example, hexane, acetone, toluene, tetrahydrofuran, or the like can be used.

The heat treatment is preferably carried out at two-stage temperature, wherein preferably, the first stage is carried out at a temperature of 200 to 400°C, while the second stage is carried out at a temperature of 800 to 1200°C. The heat treatment at the first stage can enhance the yield, while the heat treatment at the second stage is preferably carried out in a non-oxidation atmosphere such as an inactivated atmosphere. According to this heat treatment, the polycarbosilane derivative both forms a bond together with carbon, and is converted into silicon carbide.

Thereafter, the resultant catalyst carrier is put in an oxidation atmosphere, whereby silicon on the surface part is oxidized to be stabilized. Silicon is stable in the form of its oxide in a fuel-cell power generation environment. Thus, silicon on the surface part is converted into oxide to be stabilized, whereby high durability is derived. Here, the state of silicon can be measured, for example, through X-ray Photoelectron Spectroscopy system: XPS system, which is simply referred to as "XPS" hereafter.

In addition, when a metal except silicon is included in the protective layer for carbon (12), a metal alkoxide as the precursor is mixed with a polycarbosilane derivative in a solvent, the same is mixed with carbon, and the metal alkoxide is hydrolyzed into oxide, followed by heat treatment.

As the metal alkoxide, methoxide, ethoxide, propoxide and the like can be used. For example, when titanium is included, titanium methoxide, titanium ethoxide, titanium isopropoxide and the like can be used. Incidentally, metals except silicon, included in the protective layer for carbon are in the form of oxide, while merely silicon is in the form of oxide and carbide.

Fig. 2 shows a typical sectional view of a catalyst material of Example.

Fig. 2 is constituted such that the surface of carbon (21) is coated with a protective layer for carbon (22), and the surface of the protective layer for carbon (22) is carried by a catalyst metal (23) (which is also simply referred to as "catalyst"). Such constitution inhibits the corrosion of the carbon (21) by the catalyst metal (23), whereby high durability can be obtained.

Here, as the catalyst metal (23), it is preferred to use at least one selected from the group consisting of ruthenium, palladium, iridium, platinum and gold. In particular, when it is used as an anode catalyst material for a DMFC, or an anode catalyst material for a PEFC wherein hydrogen including carbon monoxide is used as fuel, it is further preferred to use an alloy of platinum and ruthenium in light of catalytic activity. Furthermore, when it is used as a cathode material for a DMFC or PEFC, or as an anode material for a PEFC wherein hydrogen including no carbon monoxide is used as fuel, it is further preferred to use platinum.

As a method of supporting the catalyst metal on the catalyst carrier, for example, an electroless plating method wherein a catalyst metal precursor is reduced with a reducing agent in a solvent can be used.

The catalyst metal precursor is not specifically limited, and when platinum is used, hexachloroplatinic acid, potassium hexachloroplatinate, sodium hexachloroplatinate, tetrachloroplatinic acid, potassium tetrachloroplatinate, sodium tetrachloroplatinate, tetraammineplatinum chloride, dinitrodiamineplatinum or the like can be used.

Additionally, the reducing agent is not also limited particularly, and sodium borohydride, hydrazine, hypophosphorous acid, formaldehyde or the like can be used. In addition, as another catalyst metal support method, for example, an impregnation method can be used.

After a solution including the catalyst metal precursor is infiltrated into the catalyst carrier, the same is dried to remove the solvent, followed by heat treatment in a reductive atmosphere including hydrogen, whereby a catalyst material is derived.

Hereinafter, a production process of the catalyst carrier will be specifically described.

### [Example 1]

1.2 g of allylhydridopolycarbosilane was mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, followed by heat treatment at 200°C in the atmosphere for 12 hours. Furthermore, a 3-hour heat treatment at 900°C in argon was carried out to derive a catalyst carrier.

Table 1 shows the result of an ICP-AES analysis for the composition of the resultant catalyst carrier.

In addition, Fig. 3 shows the result of an XPS analysis for the state of silicon.

In addition to a peak from oxide (SiO₂) observed near 103 eV, a peak from carbide (SiC) was observed near 101 eV, whereby it was confirmed that silicon exists in the form of oxide and carbide.

[Table 1]

**Table 1**

| Wt.% in Catalyst Carrier | | Atomic % in Metals | | |
|---|---|---|---|---|
| Si | Ti | Si | Ti | Nb |
| 19 | 0 | 100 | 0 | 0 |

### [Example 2]

0.6 g of allylhydridopolycarbosilane, 1.6 g of titanium ethoxde and 0.1 g of niobium ethoxide were mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, followed by heat treatment at 200°C in the atmosphere for 12 hours. Furthermore, a 3-hour heat treatment at 900°C in argon was carried out to derive a catalyst carrier.

Table 2 shows the result of an ICP-AES analysis for the composition of the resultant catalyst carrier.

In addition, an XPS analysis identified that silicon exists in the form of oxide and carbide, while titanium and niobium exist in the form of oxide.

[Table 2]

**Table 2**

| Wt.% in Catalyst Carrier | | Atomic % in Metals | | |
|---|---|---|---|---|
| Si | Ti | Si | Ti | Nb |
| 13 | 12 | 63 | 35 | 2 |

### [Example 3]

0.3 g of allylhydridopolycarbosilane, 2.5 g of titanium ethoxde and 0.2 g of niobium ethoxide were mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, followed by heat treatment at 200°C in the atmosphere for 12 hours. Furthermore, a 3-hour heat treatment at 900°C in argon was carried out to derive a catalyst carrier.

Table 3 shows the result of an ICP-AES analysis for the composition of the resultant catalyst carrier.

[Table 3]

**Table 3**

| Wt.% in Catalyst Carrier | | Atomic % in Metals | | |
|---|---|---|---|---|
| Si | Ti | Si | Ti | Nb |
| 7 | 20 | 35 | 62 | 3 |

### [Example 4]

0.6 g of allylhydridopolycarbosilane, and 1.9 g of zirconium ethoxide were mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, followed by heat treatment at 200°C in the atmosphere for 12 hours. Furthermore, a 3-hour heat treatment at 900°C in argon was carried out to derive a catalyst carrier.

Table 4 shows the result of an ICP-AES analysis for the composition of the resultant catalyst carrier.

In addition, an XPS analysis identified that silicon exists in the form of oxide and carbide, while zirconium exists in the form of oxide.

[Table 4]

**Table 4**

| Wt.% in Catalyst Carrier | | Atomic % in Metals | |
|---|---|---|---|
| Si | Zr | Si | Zr |
| 13 | 13 | 76 | 24 |

### [Example 5]

0.6 g of allylhydridopolycarbosilane, and 1.9 g of zirconium ethoxide were mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, followed by heat treatment at 200°C in the atmosphere for 12 hours. Furthermore, a 3-hour heat treatment at 900°C in argon was carried out to derive powder.

The powder was dispersed in a 50 ml of an aqueous solution of ammonia of 1 M (mol/L), and furthermore the same was put into a pressure-resistant container, followed by heat treatment at 120°C for 12 hours. After cooling, the solid was filtrated, and thereafter sufficiently washed with water, and the same was put into 50 ml of an aqueous solution of 1M phosphoric acid, followed by the reaction at 60°C for 5 hours. The solid was filtrated, and thereafter sufficiently washed with water, followed by drying the same at 120°C in the atmosphere for 2 hours to derive a catalyst carrier.

Table 5 shows the result of an ICP-AES analysis for the composition of the resultant catalyst carrier.

In addition, an XPS analysis identified that silicon exists in the form of oxide and carbide, while zirconium and phosphorus exist in the form of oxide.

[Table 5]

**Table 5**

| Wt.% in Catalyst Carrier | | | Atomic % in Metals | |
|---|---|---|---|---|
| Si | Zr | p | Si | Zr |
| 12 | 12 | 1.6 | 76 | 24 |

### [Example 6]

0.6 g of allylhydridopolycarbosilane and 1.9 g of zirconium ethoxide were mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, followed by heat treatment at 200°C in the atmosphere for 12 hours. Furthermore, a 3-hour heat treatment at 900°C in argon was carried out to derive powder. This powder was dispersed in a 50 ml of an aqueous solution of ammonia of 1 M (mol/L), and furthermore the same was put into a pressure-resistant container, followed by heat treatment at 120°C for 12 hours.

After cooling, the solid was filtrated, and thereafter sufficiently washed with water, and the same was put into 50 ml of an aqueous solution of 1M sulfuric acid, followed by the reaction at 80°C for 5 hours. The solid was filtrated, and thereafter sufficiently washed with water, followed by drying the same at 120°C in the atmosphere for 2 hours to derive a catalyst carrier.

Table 6 shows the result of an ICP-AES analysis for the composition of the resultant catalyst carrier.

In addition, an XPS analysis identified that silicon exists in the form of oxide and carbide, while zirconium and sulfur exist in the form of oxide.

[Table 6]

**Table 6**

| Wt.% in Catalyst Carrier | | | Atomic % in Metals | |
|---|---|---|---|---|
| Si | Zr | S | Si | Zr |
| 12 | 12 | 1.9 | 76 | 24 |

In an example except the above ones, with respect to tin, tin ethoxide is added as a starting material, whereby a catalyst carrier can be synthesized in a similar manner.

### (Comparative Example 1)

0.1 g of allylhydridopolycarbosilane, 3.0 g of titanium ethoxide and 0.2 g of niobium ethoxide were mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, followed by heat treatment at 200°C in the atmosphere for 12 hours.

Furthermore, a 3-hour heat treatment at 900°C in argon was carried out to derive a catalyst carrier.

Table 7 shows the result of an ICP-AES analysis for the composition of the resultant catalyst carrier.

[Table 7]

**Table 7**

| Wt.% in Catalyst Carrier | | Atomic % in Metals | | |
|---|---|---|---|---|
| Si | Ti | Si | Ti | Nb |
| 3 | 25 | 16 | 80 | 4 |

### (Comparative Example 2)

3.3 g of titanium ethoxide and 0.2 g of niobium ethoxide were mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, followed by heat treatment at 200°C in the atmosphere for 12 hours.

Furthermore, a 3-hour heat treatment at 900°C in argon was carried out to derive a catalyst carrier.

Table 8 shows the result of an ICP-AES analysis for the composition of the resultant catalyst carrier.

[Table 8]

**Table 8**

| Wt.% in Catalyst Carrier | | Atomic % in Metals | | |
|---|---|---|---|---|
| Si | Ti | Si | Ti | Nb |
| 0 | 28 | 0 | 95 | 5 |

### (Comparative Example 3)

3.4 g of tetraethyl orthosilicate was mixed with 5 g of hexane, followed by sufficiently mixing with 1.0 g of carbon black (Carbon ECP, available from LION Co., Ltd.) having a specific surface area of 800 m²/g using a mortar.

Thereafter, the resultant mixture was dried at 50°C in the atmosphere to remove hexane, and thereafter the mixture was mixed with 100 mL of an aqueous solution of hydrochloric acid of 0.01 mol/L, followed by agitation at 70°C for one hour.

Thereafter, 0.2 g of an aqueous solution of ammonia of 25% by weight was added thereto, followed by agitation at 70°C for one hour.

The same was filtrated, washed with an ion-exchanged water, and thereafter dried at 100°C, followed by heat treatment at 200°C in the atmosphere for 12 hours.

Furthermore, a 3-hour heat treatment at 900°C in argon was carried out to derive a catalyst carrier.

Table 9 shows the result of an ICP-AES analysis for the composition of the resultant catalyst carrier.

In addition, an XPS analysis identified that silicon exists merely in the form of oxide, while no carbide was observed.

[Table 9]

**Table 9**

| Wt.% in Catalyst Carrier | | Atomic % in Metals | | |
|---|---|---|---|---|
| Si | Ti | Si | Ti | Nb |
| 17 | 0 | 100 | 0 | 0 |

### (Evaluation)

In each catalyst carrier, the degree of carbon coating with a protective layer for carbon was evaluated.

The evaluation was carried out by comparing the BET specific surface area determined according to a nitrogen adsorption method with the one determined according to a water vapor adsorption method. Here, according to the nitrogen adsorption method, all of the surface area of a catalyst carrier is detected, while according to the water vapor adsorption method, only a hydrophilic surface area is detected.

According to the water vapor adsorption method, surface area is hardly detected due to the hydrophilic property of carbon. On the other hand, according to the water vapor adsorption method, a lot of surface area is detected due to the hydrophilic property of a metal oxide constituting the protective layer for carbon. Therefore, the larger the ratio of the BET specific surface area determined according to the water vapor adsorption method relative to the one determined according to the nitrogen adsorption method is, the higher the degree of carbon coating with the protective layer for carbon is.

Table 10 shows the BET specific surface area of each catalyst carrier determined according to the nitrogen adsorption method and the one determined according to the water vapor adsorption method.

[Table 10]

**Table 10**

| Catalyst Carriers | Nitrogen-Adsorption BET specific surface area S_{N} (m²/g) | Water-Vapor-Adsorption BET specific surface area Sw (_{M}²/g) | Degree of Carbon Coating SW / SN |
|---|---|---|---|
| Example 1 | 140 | 123 | 0.88 |
| Example 2 | 142 | 115 | 0.86 |
| Example 3 | 202 | 84 | 0.42 |
| Comp. Ex. 1 | 279 | 52 | 0.19 |
| Comp. Ex. 2 | 334 | 32 | 0.10 |
| Comp. Ex. 3 | 360 | 45 | 0.13 |
| Carbon ECP (Reference) | 824 | 6 | <0.01 |

The catalyst carrier in each of Examples 1 to 3 is larger in the ratio of the BET specific surface area determined according to the water vapor adsorption method than the one in each of Comparative Examples, and thus shows a higher degree of carbon coating than the one in each of Comparative Examples.

The silicon content of the protective layer for carbon (12) of the catalyst carrier in each of Examples 1 to 3 is 20 atomic % or more relative to elements consisting of metal elements, silicon, phosphorus, sulfur, arsenic, selenium and tellurium among elements detected when the ingredients of the protective layer for carbon (12) are analyzed through an Inductively Coupled Plasma-Atomic Emission Spectrometer (ICP-AES), and silicon is in the form of oxide and carbide.

From the above matters, in case of each of the catalyst carriers having the composition mentioned above in Examples 1 to 3, it is considered that the durability of carbon included in each of these catalyst carriers can be enhanced.

Hereinafter, a production process of the catalyst material will be specifically described.

1.0 g of the catalyst carrier in Example 1 was added in 300 mL of an ion-exchanged water, and agitated, and thereafter, 0.6 g of an aqueous solution of chloroplatinic acid including 28% by weight of platinum, and 0.12 g of hypophosphorous acid were added thereto, followed by agitation at 90°C for 4 hours while the pH was controlled with sodium hydroxide, whereby a catalyst material was derived.

In the catalyst material produced in such manner, most of the carbon surface is coated with a protective layer for carbon, and thus platinum, which is a catalyst metal, is scarcely directly supported on carbon. Therefore, the corrosion or disappearance of carbon is scarcely caused, while high durability is provided.

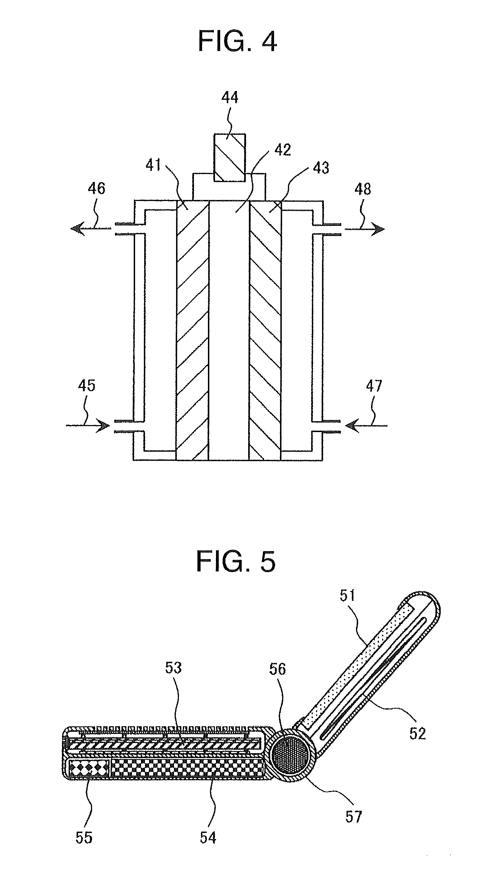

Fig. 4 is a typical diagram of a fuel cell.

The fuel cell mainly comprises an anode, a cathode, a membrane electrode assembly, wherein the anode comprises the above catalyst material, and an electrolyte binder having proton conductivity; the cathode comprises the above catalyst material, and an electrolyte binder having proton conductivity; and the membrane electrode assembly comprises a solid polymer electrolyte membrane (42) sandwiched therebetween.

It is desired that a diffused layer (not shown) such as carbon paper or carbon cloth is disposed for the anode (41) and the cathode (43).

For the anode (41) side, fuel such as hydrogen or methanol is supplied, while a sump solution (46) including exhaust gas such as unreacted hydrogen, methanol and carbon dioxide is discharged therefrom.

For the cathode (43) side, an oxidant gas (47) such as oxygen or air is supplied, while an exhaust gas (48) including a unreacted gas in the introduced gas is discharge therefrom.

In addition, the anode (41) and the cathode (43) are connected to an external circuit (44).

Here, when an acidic hydrogen-ion conductive material is used as the electrolyte binder or the electrolyte membrane (42), a stable fuel cell can be achieved without the influence of carbon dioxide in the atmosphere.

As such material, a fluorinated polymer exemplified by
polyperfluorocarbonsulfonic acid, wherein sulfonic acid is introduced; a material wherein sulfonic acid is introduced in a hydrocarbon polymer, such as polystyrene sulfonic acid, sulfonated polyethersulfone, sulfonated poly(ether ether ketone); or a material wherein alkyl sulfonic acid is introduced in a hydrocarbon polymer; or the like can be used.
Further, the electrolyte binder or electrolyte membrane in the electrode can include at least one inorganic material selected from the group consisting of silica (SiO₂), zirconia (ZrO₂), tin oxide (SnO₂) and titania (TiO₂).
In addition, the electrolyte binder or electrolyte membrane in the electrode can be moderately cross-linked through electron irradiation or chemical treatment, or with a crosslinking agent.

The use of these materials as an electrolyte membrane can bring a fuel cell into operation at a temperature of 80°C or less.

Besides, the use of a composite electrolyte membrane or the like wherein a hydrogen conductive inorganic substance such as hydrated tungsten oxide, hydrated zirconium oxide or hydrated tin oxide is microdispersed in a heat-resistant resin or a sulfonated resin can also form a fuel cell operable to a higher-temperature region.

These electrolyte membranes possesses high proton conductivity. In addition, in case of a DMFC, the use of an electrolyte membrane which is low in methanol permeability increases the utilization factor for electricity generation, which is preferred.

In addition, also as the binder, a solid polymer electrolyte membrane can be used in a similar manner, and the one having the quality of material similar to the one of the electrolyte membrane can be used.

Further, as a method of manufacturing the membrane electrode assembly, there exists a method wherein the catalyst material and binder in each of Examples mentioned above are dispersed in a solvent, followed by the application of the resultant dispersion to the electrolyte membrane by a spraying method, an ink-jet method, or the like; a method wherein the dispersion is applied to a sheet of Teflon (registered trademark) or the like, followed by the application of the same to the electrolyte membrane by thermal transfer; or a method wherein the dispersion is applied to a diffused layer, followed by the application of the same to the electrolyte membrane.

The membrane electrode assembly using a catalyst material, derived in this manner possesses high durability. Furthermore, a fuel cell using this membrane electrode assembly possesses high durability.

Incidentally, as an example, a catalyst material wherein silicon oxide and silicon carbide are used as the protective layer for carbon (having a thickness of 10 nm or less), and platinum is used as the catalyst was manufactured, and this catalyst material was used in a fuel cell, followed by the actual determination of performance as a cell. As a result, it is found that the resultant fuel cell increases electric current per unit mass of platinum by 60% or more than the one wherein no protective layer for carbon was provided in the catalyst carrier.

Fig. 5 shows an example wherein a fuel cell manufactured as an example of the fuel-cell-power generation system is installed in a portable information terminal.

The portable information terminal shown in Fig. 5 adopts a folding structure wherein two parts are connected to each other by a hinge (57) combining with a holder for a fuel cartridge (56).

The one part houses a display device (51) with which a touch-panel input device is integrated, and an antenna (52).

The other part is mounted with a fuel cell (53), a processer, volatile and nonvolatile memories, a power control part, a hybrid control of the fuel cell and a secondary battery, a main board (54) wherein electronics devices such as a fuel monitor, and electronic circuits are installed, and a lithium-ion secondary battery.

The portable information terminal derived in this manner can be used for a long period of time.

In addition, the catalyst material can be used as other electrocatalytic materials. For example, an electrocatalytic material for an air cell can be enumerated.

The fuel-cell-power generation system includes all of electronics devices wherein a miniaturized fuel cell can be embedded without limit to the portable information terminal mentioned above. Further, the fuel-cell-power generation system includes, but not limited to,
a medium-sized or king-sized power generation system, for example, even a power generation system including an air conditioner (absorption air conditioner, heat pump), a suction type heat pump, and the like. In addition, the fuel-cell-power generation system also includes a luggable and portable electric source.

### Industrial Applicability

The present invention relates to a catalyst material used in a fuel cell, and such catalyst material can be utilized for a polymer electrolyte fuel cell and a direct methanol fuel cell.

### Description of Reference Numerals

11: carbon,
12: protective layer for carbon,
21: carbon,
22: protective layer for carbon,
23: catalyst metal,
41: anode,
42: solid polymer electrolyte membrane,
43: cathode,
44: external circuit,
45: fuel,
46: sump solution,
47: oxidant gas,
48: exhaust gas,
51: display device,
52: antenna,
53: fuel cell,
54: main board,
55: lithium-ion secondary battery,
56: cartridge for fuel, and
57: hinge.

## Claims

1. A catalyst carrier comprising:
carbon (21); and
a protective layer (22) for carbon (21)with which said carbon (21) is coated,
wherein said protective layer (22) for carbon (21) comprises silicon carbide and silicon oxide.

2. The catalyst carrier according to claim 1, wherein among said protective layer (22) for carbon (21), a vicinity part of an interface between said protective layer (22) for carbon (21) and said carbon (21) comprises silicon carbide, while a surface part of said protective layer (22) for carbon (21) comprises silicon oxide.

3. The catalyst carrier according to claim 1, wherein said protective layer (22) for carbon (21) comprises at least one element selected from the group consisting of titanium, germanium, niobium, zirconium, molybdenum, ruthenium, rhodium, tin, tantalum, tungsten and osmium.

4. The catalyst carrier according to claim 1, wherein a surface of said protective layer (22) for carbon (21) comprises at least one functional group selected from the group consisting of phosphate group and sulfonic acid group.

5. The catalyst carrier according to claim 1, wherein a silicon content of the protective layer (22) for carbon (21) is 20 atomic % or more based on elements consisting of metal elements, silicon, phosphorus, sulfur, arsenic, selenium and tellurium among elements detected when the ingredients of the protective layer (22) for carbon (21) are analyzed through an Inductively Coupled Plasma-Atomic Emission Spectrometer.

6. The catalyst carrier according to claim 1, wherein said protective layer (22) for carbon (21) is 10 nm or less in thickness.

7. A catalyst material comprising:
the catalyst carrier according to claim 1; and
a catalyst supported on said catalyst carrier.

8. The catalyst material according to claim 7, wherein said catalyst comprises at least one element selected from the group consisting of ruthenium, palladium, iridium, platinum and gold.

9. A membrane electrode assembly comprising:
an anode (41);
a cathode (43); and
an electrolyte membrane (42),
wherein said anode (41) comprises the catalyst material according to claim 7 and a proton conductive material, and oxidizes fuel,
said cathode (43) comprises said catalyst material and a proton conductive material, and reduces oxygen,
said electrolyte membrane (42) is disposed between said anode (41) and said cathode (43), and has proton conductivity.

10. A fuel cell comprising:
the membrane electrode assembly (41, 42, 43) according to claim 9;
a member for supplying fuel (45);
a member for supplying oxygen (47); and
a member (44) for collecting current.

11. A fuel-cell-power generation system comprising the fuel cell according to claim 10.

12. A method for manufacturing a catalyst carrier comprising carbon (21) and a protective layer (22) for carbon (21) for coating said carbon (21), which process comprises the steps of:
coating said carbon (21) with a precursor of said protective layer (22) for carbon (21); and
subjecting the resulting material to heat treatment after coating said carbon (21) with said precursor,
wherein said precursor comprises at least a polycarbosilane derivative.

13. The method for manufacturing a catalyst carrier according to claim 12, wherein said precursor comprises alkoxide.
